# EUROPEAN PATENT SPECIFICATION

(11) **EP 2 180 157 B1**
(45) Date of publication and mention of the grant of the patent: **18.04.2012**
(21) Application number: 09173180.2
(22) Date of filing: 15.10.2009
(51) Int. Cl.: F01N 9/00, F01N 11/00, F01N 3/20

(54) **Diagnostic method for selective catalytic reduction (SCR) exhaust treatment system**
Diagnoseverfahren zur Abgasbehandlungssystem mit selektiver katalytischer Reduktion (SKR)
Procédé de diagnostic pour système de traitement d'échappement de réduction catalytique sélective

(30) Priority: 24.10.2008 US 108172 P; 04.12.2008 US 327945
(43) Date of publication of application: 28.04.2010
(73) Proprietor: Delphi Technologies, Inc., Troy, MI 48007 (US)
(72) Inventor: Herman, Andrew D., Grand Blanc, MI 48439 (US); Wu, Ming-Cheng, Troy, MI 48098 (US); Cabush, David D., Howell, MI 48843 (US); Shost, Mark A., Northville, MI 48168-4437 (US)
(74) Representative: Denton, Michael John

(56) References cited:
- US-A1- 2004 098 968
- US-A1- 2007 044 456
- US-A1- 2007 137 181
- US-A1- 2008 022 658
- US-A1- 2008 022 659

## Description

### TECHNICAL FIELD

The present invention relates generally to diagnostics and more particularly to diagnostic methods for selective catalytic reduction (SCR) based engine exhaust treatment systems.

### BACKGROUND OF THE INVENTION

The relevant background includes the fields of exhaust gas treatment systems and diagnostics therefore. As to the former field of endeavor, there have been a variety of exhaust gas treatment systems developed in the art to minimize emission of undesirable constituent components of engine exhaust gas. It is known to reduce NOx emissions using a SCR catalyst, treatment device that includes a catalyst and a system that is operable to inject material such as ammonia (NH₃) into the exhaust gas feedstream ahead of the catalyst. The SCR catalyst is constructed so as to promote the reduction of NOx by NH₃ (or other reductant, such as aqueous urea which undergoes decomposition in the exhaust to produce NH₃). NH₃ or urea selectively combine with NOx to form N₂ and H₂O in the presence of the SCR catalyst, as described generally in U.S. Patent Publication 2007/0271908 entitled "ENGINE EXHAUST EMISSION CONTROL SYSTEM PROVIDING ON-BOARD AMMONIA GENERATION". For diesel engines, for example, selective catalytic reduction (SCR) of NOx with ammonia is perhaps the most selective and active reaction for the removal of NOx in the presence of excess oxygen. The NH₃ source must be periodically replenished and the injection of NH₃ into the SCR catalyst requires precise control. Overinjection may cause a release of NH₃ ("slip") out of the tailpipe into the atmosphere, while underinjection may result in inadequate emissions reduction (*i.e*., inadequate NOx conversion to N₂ and H₂O).

These systems have been amply demonstrated in the stationary catalytic applications. For mobile applications where it is generally not possible (or at least not desirable) to use ammonia directly, urea-water solutions have been proven to be suitable sources of ammonia in the exhaust gas stream. This has made SCR possible for a wide range of vehicle applications.

Increasingly stringent demands for low tail pipe emissions of NOx have been placed on heavy duty diesel powered vehicles. Liquid urea dosing systems with selective catalytic NOx reduction (SCR) technologies have been developed in the art that provide potentially viable solutions for meeting current and future diesel NOx emission standards around the world. Ammonia emissions may also be set by regulation or simply as a matter of quality. For example, proposed future European emission standards (*e.g*., EU 6) for NH₃ slip targets specify 10 ppm average and 30 ppm peak. However, the challenge described above remains, namely, that such treatment systems achieve maximum NOx reduction (*i.e*., at least meeting NOx emissions criteria) while at the same time maintaining acceptable NH₃ emissions, particularly over the service life of the treatment system.

In addition to the substantive emissions standards described above, vehicle-based engine and emission systems typically also require various self-monitoring diagnostics to ensure tailpipe emissions compliance. In this regards, U.S. federal and state on-board diagnostic regulations (*e.g*., OBDII) require that certain emission-related systems on the vehicle be monitored, and that a vehicle operator be notified if the system is not functioning in a predetermined manner. Automotive vehicle electronics therefore typically include a programmed diagnostic data manager or the like service configured to receive reports from diagnostic algorithms/circuits concerning the operational status of various components or systems and to set/reset various standardized diagnostic trouble codes (DTC) and/or otherwise generate an alert (*e.g*., MIL). The intent of such diagnostics is to inform the operator when performance of a component and/or system has degraded to a level where emissions performance may be affected and to provide information (*e.g*., via the DTC) to facilitate remediation.

Over the service life of the above-described exhaust treatment systems, various constituent components can wear, degrade or the like, possibly impairing overall performance. For example, degradation of either the SCR catalyst or the dosing system may impair the treatment system in meeting either or both of the NOx and NH₃ emission standards. Open loop control does not appear to provide an adequate solution. It would be advantageous to provide diagnostic routines to detect any such degradation.

There is therefore a need for diagnostic methods that minimize or eliminate one or more of the problems set forth above. US-A-2007/044456 discloses a method in accordance with the preamble of claim 1.

### SUMMARY OF THE INVENTION

The invention has particular utility in an internal combustion engine including an exhaust gas treatment system having selective catalytic reduction (SCR) catalyst.

In one aspect of the invention, a diagnostic method is provided that determines when NH₃ sensing feedback-based adaptive learning for adjusting the target theta values excessively learns. When this condition is detected, a fault or error is generated by the diagnostic.

### BRIEF DESCRIPTION OF THE DRAWINGS

The present invention will now be described by way of example, with reference to the accompanying drawings:

Figure 1 is a diagrammatic and block diagram showing an exhaust treatment system in which the diagnostic methods of the invention may be practiced.

Figure 2 is a block diagram showing an overview of the dosing control that includes an SCR model as well as improvements in diagnostic methods.

Figure 3 is a signal flow mechanization schematic showing inputs and outputs of the SCR model.

Figure 4 is a simplified diagram showing typical target theta (θ) values or curves as a function of temperature.

Figure 5 is a flowchart showing a method of using theta perturbation for diagnostics.

Figure 6 is a combination chart showing a first embodiment of the method of Figure 5 involving theta perturbation for determining an SCR catalyst state of health.

Figure 7 is a combination chart showing a second embodiment of the method of Figure 5 involving theta perturbation for determining an NH₃ sensor state of health.

Figure 8 is a flowchart showing a diagnostic method for generating a fault when theta adaptation exceeds control authority.

### DETAILED DESCRIPTION OF THE PREFERRED EMBODIMENT

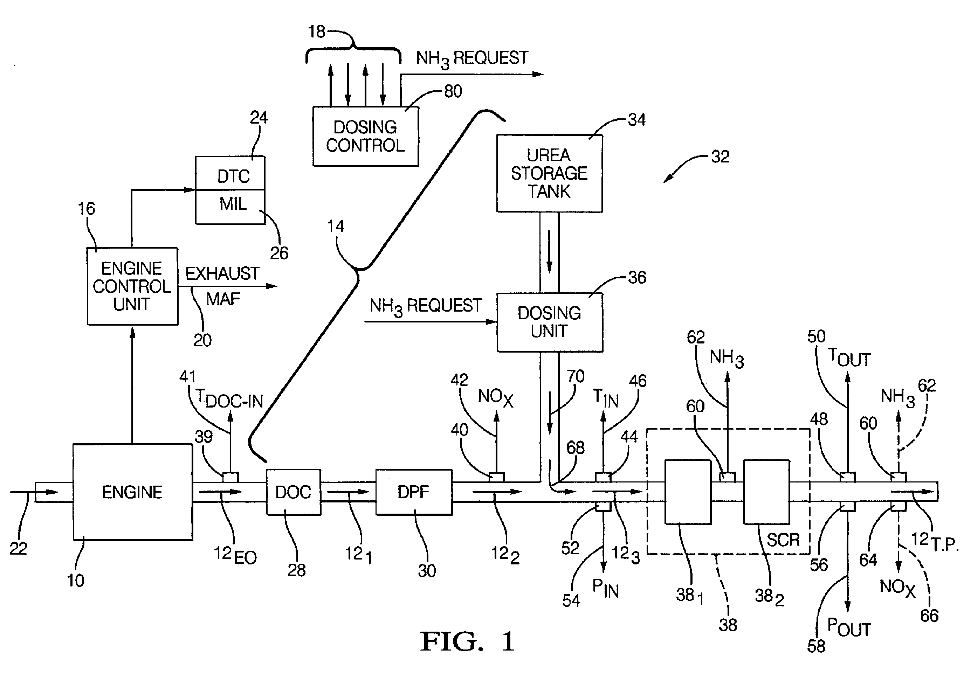

Referring now to the drawings wherein like reference numerals are used to identify identical components in the various views, Figure 1 is a diagrammatic and block diagram showing an exemplary diesel cycle internal combustion engine 10 whose combustion exhaust gas 12 is fed to an exhaust gas treatment system 14. The exhaust gas is represented as a stream flowing through the exhaust gas treatment system 14 and is shown as a series of arrows designated 12_{EO} (engine out), 12₁, 12₂, 12₃ and 12 _{TP} (tail pipe). It should be understood that while the invention will be described in connection with an automotive vehicle (*i.e*., mobile) embodiment, the invention may find useful application in stationary applications as well. In addition, embodiments of the invention may be used in heavy-duty applications (*e.g*., highway tractors, trucks and the like) as well as light-duty applications (*e.g*., passenger cars). Moreover, embodiments of the invention may find further useful application in various types of internal combustion engines, such as compression-ignition (*e.g*., diesel) engines as well as spark-ignition engines.

In the illustrative embodiment, the engine 10 may be a turbocharged diesel engine. In a constructed embodiment, the engine 10 comprised a conventional 6.6-liter, 8-cylinder turbocharged diesel engine commercially available under the DuraMax trade designation. It should be understood this is exemplary only.

Figure 1 also shows an engine control unit (ECU) 16 configured to control the operation of the engine 10. The ECU 16 may comprise conventional apparatus known generally in the art for such purpose. Generally, the ECU 16 may include at least one microprocessor or other processing unit, associated memory devices such as read only memory (ROM) and random access memory (RAM), a timing clock, input devices for monitoring input from external analog and digital devices and controlling output devices. The ECU 16 is operable to monitor engine operating conditions and other inputs (*e.g*., operator inputs) using the plurality of sensors and input mechanisms, and control engine operations with the plurality of output systems and actuators, using pre-established algorithms and calibrations that integrate information from monitored conditions and inputs. It should be understood that many of the conventional sensors employed in an engine system have been omitted for clarity. The ECU 16 may be configured to calculate an exhaust mass air flow (MAF) parameter 20 indicative of the mass air flow exiting engine 10.

The software algorithms and calibrations which are executed in the ECU 16 may generally comprise conventional strategies known to those of ordinary skill in the art. Overall, in response to the various inputs, the ECU 16 develops the necessary outputs to control the throttle valve position, fueling (fuel injector opening, duration and closing), spark (ignition timing) and other aspects, all as known in the art.

In addition to the control of the engine 10, the ECU 16 is also typically configured to perform various diagnostics. For this purpose, the ECU 16 may be configured to include a diagnostic data manager or the like, a higher level service arranged to manage the reports received from various lower level diagnostic routines/circuits, and set or reset diagnostic trouble code(s)/service codes, as well as activate or extinguish various alerts, all as known generally in the art. For example only, such a diagnostic data manager may be pre-configured such that certain non-continuous monitoring diagnostics require that such diagnostic fail twice before a diagnostic trouble code (DTC) is set and a malfunction indicator lamp (MIL) is illuminated. As shown in Figure 1, the ECU 16 may be configured to set a corresponding diagnostic trouble code (DTC) 24 and/or generate an operator alert, such an illumination of a MIL 26. Although not shown, in one embodiment, the ECU 16 may be configured so as to allow interrogation (*e.g*., by a skilled technician) for retrieval of such set DTCs. Generally, the process of storing diagnostic trouble codes and subsequent interrogation and retrieval is well known to one skilled in the art and will not be described in any further detailed.

With continued reference to Figure 1, the exhaust gas treatment system 14 may include a diesel oxidation catalyst (DOC) 28, a diesel particulate filter (DPF) 30, a dosing subsystem 32 including at least (i) a reductant (*e.g*., urea-water solution) storage tank 34 and (ii) a dosing unit 36, and a selective catalytic reduction (SCR) catalyst 38. In addition, Figure 1 shows various sensors disposed in and/or used by the treatment system 14. These include a DOC inlet temperature sensor 39 configured to generate a DOC inlet temperature signal 41 (TD_{OC-IN}), a NOx sensor 40 configured to generate a NOx signal 42 (NOx) indicative of a sensed NOx concentration, a first exhaust gas temperature sensor 44, located at the inlet of the SCR catalyst 38, configured to generate a first temperature signal 46 (T_{IN}), an optional second exhaust gas temperature sensor 48 configured to generate a second temperature signal 50 (T_{OUT}), a first pressure sensor 52 configured to generate a first pressure signal 54 (P_{IN}), a second pressure sensor 56 configured to generate a second pressure signal 58 (P_{OUT}), and an ammonia (NH₃) concentration sensor 60 configured to generate an ammonia concentration signal 62 indicative of the sensed NH₃ concentration. In many commercial vehicles, a NOx sensor 64 is provided for generating a second NOx signal 66 indicative of the NOx concentration exiting the tail pipe. However, such is shown for completeness only.

The DOC 28 and the DPF 30 may comprise conventional components to perform their known functions.

The dosing subsystem 32 is responsive to an NH₃ Request signal produced by a dosing control 80 and configured to deliver a NOx reducing agent at an injection node 68, which is introduced in the exhaust gas stream in accurate, controlled doses 70 (*e.g*., mass per unit time). The reducing agent ("reductant") may be, in general, (1) NH₃ gas or (2) a urea-water solution containing a predetermined known concentration of urea. The dosing unit 32 is shown in block form for clarity and may comprise a number of sub-parts, including but not limited to a fluid delivery mechanism, which may include an integral pump or other source of pressurized transport of the urea-water solution from the storage tank, a fluid regulation mechanism, such as an electronically controlled injector, nozzle or the like (at node 68), and a programmed dosing control unit. The dosing subsystem 32 may take various forms known in the art and may comprise commercially available components.

The SCR catalyst 38 is configured to provide a mechanism to promote a selective reduction reaction between NOx, on the one hand, and a reductant such as ammonia gas NH₃ (or aqueous urea, which decomposes into ammonia, NH₃) on the other hand. The result of such a selective reduction is, as described above in the Background, N₂ and H₂O. In general, the chemistry involved is well documented in the literature, well understood to those of ordinary skill in the art, and thus will not be elaborated upon in any greater detail. In one embodiment, the SCR catalyst 38 may comprise copper zeolite (Cu-zeolite) material, although other materials are known. See, for example, U.S. Patent No. 6,576,587 entitled "HIGH SURFACE AREA LEAN NOx CATALYST" issued to Labarge et al., and U.S. Patent No. 7,240,484 entitled "EXHAUST TREATMENT SYSTEMS AND METHODS FOR USING THE SAME" issued to Li et al., both owned by the common assignee of the present invention. In addition, as shown, the SCR catalyst 38 may be of multi-brick construction, including a plurality of individual bricks 38₁, 38₂ wherein each "brick" may be substantially disc-shaped. The "bricks" may be housed in a suitable enclosure, as known.

The NOx concentration sensor 40 is located upstream of the injection node 68. The NOx sensor 40 is so located so as to avoid possible interference in the NOx sensing function due to the presence of NH₃ gas. The NOx sensor 40, however, may alternatively be located further upstream, between the DOC 28 and the DPF 30, or upstream of the DOC 28. In addition, the exhaust temperature is often referred to herein, and for such purpose, the temperature reading from the SCR inlet temperature sensor 44 (T_{IN}) may be used.

The NH₃ sensor 60 may be located, in certain embodiments, at a mid-brick position, as shown in solid line (*i.e*., located anywhere downstream of the inlet of the SCR catalyst 38 and upstream of the outlet of the SCR catalyst 38). As illustrated, the NH₃ sensor 60 may be located at approximately the center position. The mid-brick positioning is significant. The sensed ammonia concentration level in this arrangement, even during nominal operation, is at a small yet detectable level of mid-brick NH₃ slip, where the downstream NOx conversion with this detectable NH₃ can be assumed in the presence of the rear brick, even further reducing NH₃ concentration levels at the tail pipe to within acceptable levels. Alternatively, in certain embodiments, the NH₃ sensor 60 may be located at the outlet of the SCR catalyst 38. The remainder of the sensors shown in Figure 1 may comprise conventional components and be configured to perform in a conventional manner known to those of ordinary skill in the art.

The dosing control 80 is configured to generate the NH₃ Request signal that is sent to the dosing unit 36, which represents the command for a specified amount (*e.g*., mass rate) of reductant to be delivered to the exhaust gas stream. The dosing control 80 includes a plurality of inputs and outputs, designated 18, for interface with various sensors, other control units, etc., as described herein. Although the dosing control 80 is shown as a separate block, it should be understood that depending on the particular arrangement, the functionality of (the dosing control 80 may be implemented in a separate controller, incorporated into the ECU 16, or incorporated, in whole or in part, in other control units already existing in the system (*e.g*., the dosing unit). Further, the dosing control 80 may be configured to perform not only control functions described herein but perform the various diagnostics also described herein as well. For such purpose, the dosing control 80 may include conventional processing apparatus known in the art, capable of executing pre-programmed instructions stored in an associated memory, all performing in accordance with the functionality described herein. That is, it is contemplated that the control and diagnostic processes described herein will be programmed in a preferred embodiment, with the resulting software code being stored in the associated memory. Implementation of the invention, in software, in view of the foregoing enabling description, would require no more than routine application of programming skills by one of ordinary skill in the art. Such a control may further be of the type having both ROM, RAM, a combination of non-volatile and volatile (modifiable) memory so that the software can be stored and yet allow storage and processing of dynamically produced data and/or signals.

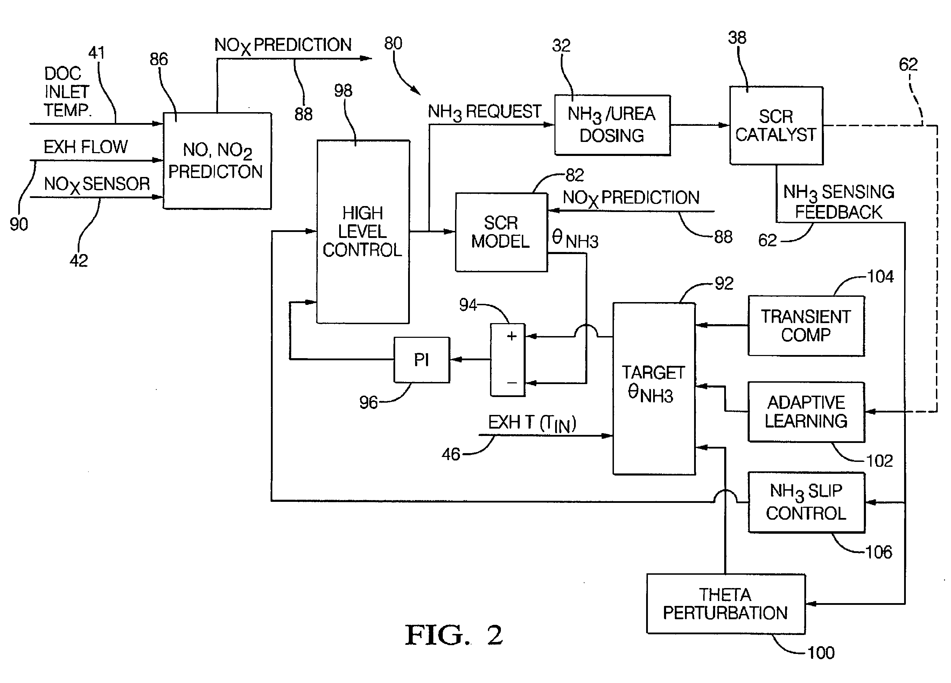

Figure 2 is a block diagram showing an overview of the dosing control 80 of Figure 1. The basic strategy is to control the dosing rate (*e.g*., urea-water solution) so as to ensure that the there is adequate ammonia stored in the SCR catalyst 38 to achieve (i) a high NOx conversion rate (*i.e*., conversion of NOx into N₂ and H₂O), with (ii) a low occurrence or no occurrence at all of ammonia (NH₃) slips exceeding predetermined maximum thresholds.

Overall, the dosing control 80 is configured to generate an NH₃ Request, which is communicated to the dosing unit 36 (*i.e*., shown as the "NH₃/Urea Dosing"). In the illustrative embodiment, the NH₃ Request is indicative of the mass flow rate at which the dosing subsystem 32 is to introduce the urea-water solution into the exhaust gas stream. The control variable used in implementing the dosing control strategy is a so-called ammonia surface coverage parameter theta (θ_{NH3}), which corresponds to the NH₃ surface storage fraction associated with the SCR catalyst 38. In other words, the ammonia surface coverage parameter theta (θ_{NH3}) indicates the amount of ammonia-NH₃ stored in the SCR catalyst 38. One aspect of the operation of the dosing control 80 involves an SCR model 82.

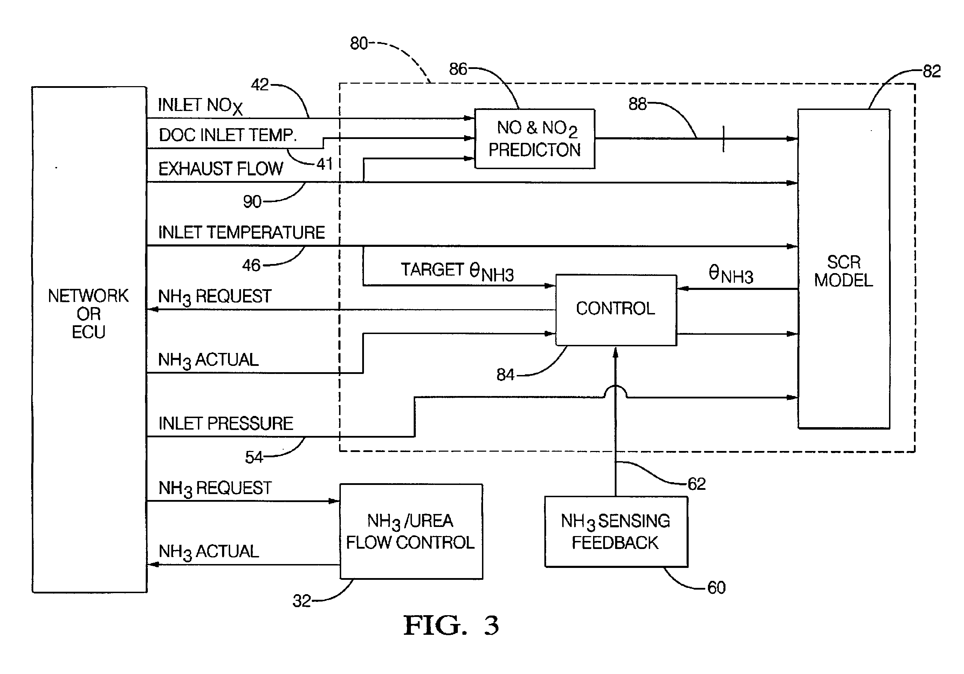

Figure 3 is a signal flow mechanization schematic showing inputs and outputs of the SCR model 82. The SCR model 82 is a chemistry-based SCR model, and is shown with a theta control block 84, and a "NO and NO₂" predictor block 86. The SCR model 82 is configured to model the physical SCR catalyst 38 and compute real time values for the ammonia surface coverage parameter theta (θ_{NH3}). The theta control block 84 is configured to compare the computed theta (θ_{NH3}) against a target value for theta ("Target θ_{NH3}"), which results in a theta error. The theta control block 84 is configured to use a control strategy (*e.g*., a proportional-integral (PI) control algorithm) to adjust the requested NH₃ dosing rate ("NH₃ Request") to reduce the theta error. The theta control block 84 also employs closed-loop feedback, being responsive to ammonia sensing feedback by way of the ammonia sensor 60. The theta control block 84 may use NH₃ feedback generally to adapt target theta values to account for catalyst degradation, urea injection malfunction or dosing fluid concentration variation that may be encountered during real-world use. As will be described, the NH₃ sensing feedback is also used for various control and diagnostic improvements. The predictor block 86 receives the DOC inlet temperature signal 41 (TD_{OC-IN}), the NOx sensor signal 42 and the exhaust flow signal 90 as inputs and is configured to produce data 88 indicative of the respective NO and NO₂ concentration levels (engine out) produced by the engine 10. The predictor block 86 may comprise a look-up table (LUT) containing NO and NO₂ data experimentally measured from the engine 10.

The SCR model 82 may be configured to have access to a plurality of signals/parameters as needed to execute the predetermined calculations needed to model the catalyst 38. In the illustrative embodiment, this access to sensor outputs and other data sources may be implemented over a vehicle network (not shown), but which may be a controller area network (CAN) for certain vehicle embodiments. Alternatively, access to certain information may be direct to the extent that the dosing control 80 is integrated with the engine control function in the ECU 16. It should be understood that other variations are possible.

The SCR model 82 may comprise conventional models known in the art for modeling an SCR catalyst. In one embodiment, the SCR model 82 is responsive to a number of inputs, including: (i) predicted NO and NO₂ levels 88; (ii) an inlet NOx amount, which may be derived from the NOx indicative signal 42 (best shown in Figure 1); (iii) an exhaust mass air flow (MAF) amount 90, which may be either a measured value or a value computed by the ECU 16 and shown as exhaust MAF parameter 20 in Figure 1; (iv) an SCR inlet temperature, which may be derived from the first temperature signal 46 (T_{IN}); (v) an SCR inlet pressure, which may be derived from the first pressure signal 54 (PIN); and (vi) the actual amount of reductant (*e.g*., NH₃, urea-water solution shown as "NH₃ Actual" in Figure 2) introduced by the dosing subsystem 32. The actual NH₃ amount helps ensure that the model provides accurate tracking of the reductant dosing. In one embodiment, values for theta (θ_{NH3}) are updated at a frequency of 10 Hz, although it should be understood this rate is exemplary only. There are a plurality of modeling approaches known in the art for developing values for a surface coverage parameter theta (θ_{NH3}), for example as seen by reference to the article by M. Shost et. al, "Monitoring, Feedback and Control of Urea SCR Dosing Systems for NOx Reduction: Utilizing an Embedded Model and Ammonia Sensing", SAE Technical Paper Series 2008-01-1325.

Referring again to Figure 2 the dosing control 80 includes additional blocks. In particular, a target theta parameter (Target θ_{NH3}) block 92 is shown, which is configured to provide a value for the target theta parameter (Target θ_{NH3}) preferably as function of temperature (*e.g*., exhaust gas temperature, such as the SCR inlet temperature T_{IN}). The target θ_{NH3}, which is determined as a function of the SCR catalyst inlet temperature T_{IN}, is conventionally set-up based on the following considerations: (1) desire to achieve a maximum possible NOx conversion efficiency with acceptable NH₃ slip levels (30 ppm peak, 10 ppm average) for a given emission test cycle, and (2) recognition that limits must be set for the theta values at low temperatures to prevent potential high NH₃ slips upon sudden temperature ramp up in off-cycle tests. In other words, in a pure ammonia storage control mode (*i.e*., theta parameter control), different emission cycles may call for different theta values in order to achieve the best NOx conversion within the confines of the applicable NH₃ slip limits.

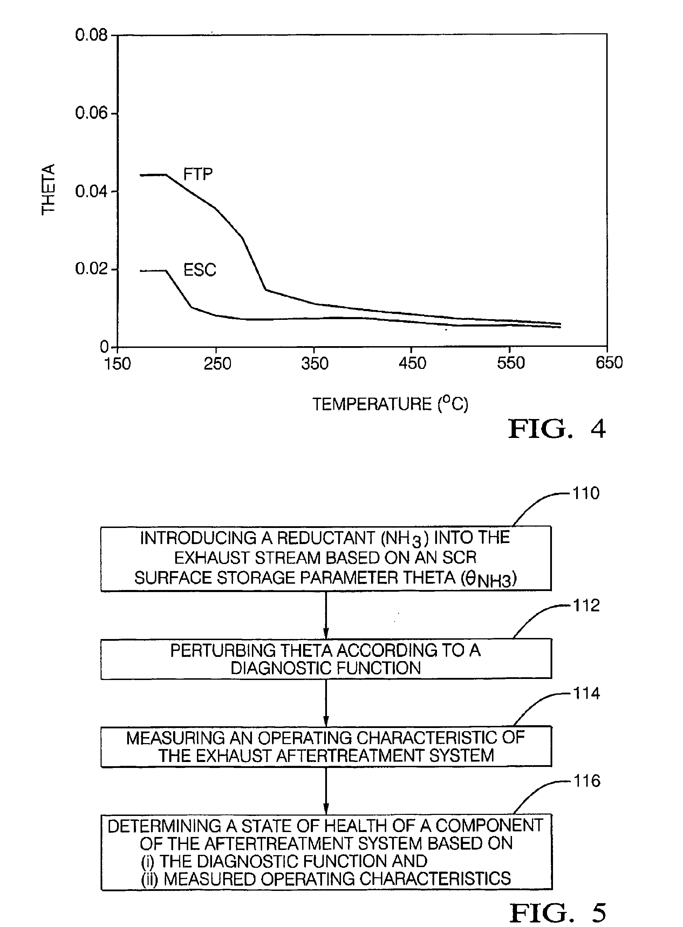

Figure 4 is a diagram showing exemplary target theta θ_{NH3} curves determined for both the Euro Stationary Cycle (ESC) and the Federal Test Procedure (FTP) emission cycles using Cu-zeolite catalysts. As a practical matter, however, only one curve can be used in real world situations. The values from one of the target theta curves may be stored in a look-up table (LUT) or the like for run-time use by the theta control block 84 of the dosing control 80. Such values may take the form of (temperature, theta value) data pairs.

As shown in Figure 2, the theta control 84 further includes a comparator 94 (*e.g*., a summer, or equivalent) configured to generate the theta error signal described above, indicative of the difference between the target theta (Target θ_{NH3}) and the computed theta (θ_{NH3}) from the SCR model. A PI control 96 is configured to produce an output signal configured to reduce the magnitude of the theta error. A high level control block 98 is responsive to various inputs to produce the NH₃ Request signal, which is communicated to the dosing subsystem 32.

Figure 2 also shows, in block form, a number of additional control and diagnostic features. These additional control and diagnostic features may be arranged to work together in some embodiments to achieve maximum NOx conversion while maintaining acceptable NH₃ slip levels under various driving conditions (*i.e*., in vehicle applications). The dosing control 80 thus includes a number of functional blocks to implement these features: a theta perturbation diagnostic block 100, an adaptive learning diagnostic block 102, a transient compensation control block 104 and an NH₃ slip control block 106.

The theta perturbation diagnostic block 100 is configured to perturb the target theta parameter in accordance with a small diagnostic function and to measure the resulting response to determine the state of health of one or more components of the exhaust treatment system 14.

The adaptive learning diagnostic block 102 includes a diagnostic feature that monitors how much adaptation has been applied in adjusting the target theta parameter and generates an error when the level of adaptation exceeds predetermined upper and lower limits. The logic in operation is that at some level, the ability to adapt target theta values to overcome errors (*e.g*., reagent mis-dosing, reagent quality problems, SCR catalyst degradation) will reach its control limit for maintaining emissions. When this control limit is exceeded, the diagnostic generates an error.

The transient compensation block 104 is configured generally to reduce NH₃ dosing when specified exhaust transients are detected, such as sudden increases in exhaust mass air flow or when an exhaust temperature gradient is in an "increasing" state. The NH₃ slip control block 106 is configured to selectively shut-off NH₃ dosing when the measured NH₃ slip level (mid-brick sensor) exceeds a predetermined trip level at a time when certain other exhaust conditions are satisfied (*e.g*., temperature gradient is in the "increasing" state). These features are described in greater detail in co-pending patent application entitled "EXHAUST GAS TREATMENT SYSTEM AND METHODS OF OPERATING THE SAME", (Attorney Docket No. DP-318318), filed on even date herewith, owned by the common assignee of the present invention, USSN 12/327958 (US-A-2010/101215).

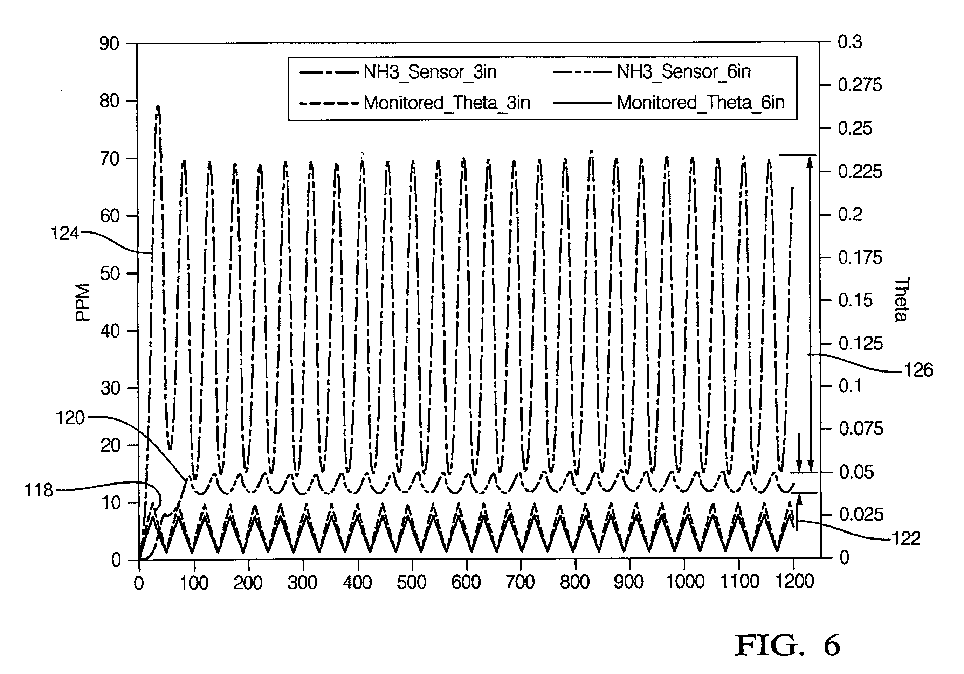

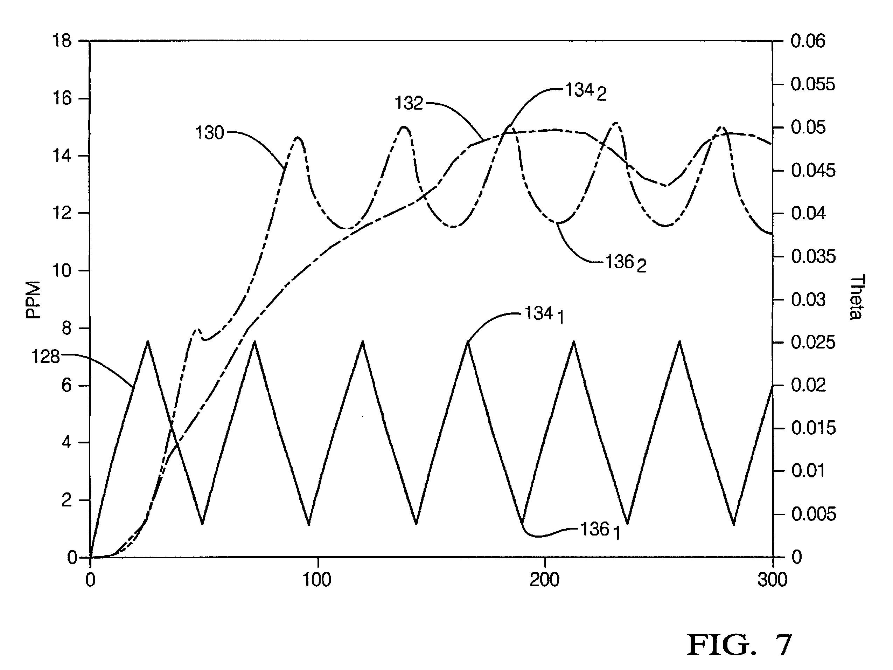

*Theta Perturbation Diagnostics*. Figure 5 is a flowchart showing a diagnostic method involving theta perturbation to determine a state of health of one or more different components of the exhaust treatment system 14. As described in the Background, one challenge for SCR-based exhaust treatment system developers is to incorporate sufficient robustness in the control scheme to maintain performance throughout the service life of the exhaust treatment system. However, the performance of various components can degrade over time and with usage, even beyond that correctable by a robust control scheme. Accordingly, it would be desirable to know the state of health of one or more individual components in order to take appropriate diagnostic or control action. For example, such diagnostic, upon determining a degradation of a component, may be configured to issue an alert to the operator (*e.g*., such as turning on a MIL 26 Figure 1) indicating that a component has degraded in performance to the point where it is not correctable by the control system and hence may have emissions implications. Additionally, the diagnostic may further be configured to set a diagnostic trouble code (*e.g*., DTC 24-Figure 1) to facilitate troubleshooting by a technician. As an overview, Figure 5 shows a flowchart describing the general diagnostic method, while Figures 6 and 7 will be used to describe particular applications of this general method to determine the state of health of an SCR catalyst (Figure 6) and an ammonia concentration sensor (Figure 7). The general method includes steps 110, 112, 114 and 116.

The method begins in step 110. Step 110 involves introducing a reductant (*e.g*., ammonia gas or urea-water solution, as described above) into the exhaust stream in an amount based on the target ammonia surface coverage parameter theta (target θ_{NH3}). This basic control approach has already been described above in connection with Figures 2-4. In addition, it has been described above that the dosing control 80 utilizes a calculated theta parameter (feedforward control--θ_{NH3}) in conjunction with closed-loop control via ammonia concentration level as feedback from ammonia sensor 60, preferably located at a mid-brick position of the catalyst 38. The method proceeds to step 112.

In step 112, the diagnostic method involves perturbing the target theta parameter in accordance with a known, predetermined diagnostic function. Preferably, this is performed during steady-state engine operating conditions so any observed variations in the sensed NH₃ concentration level signal can be safely attributed to the perturbation. In this regard, applying a known, intrusive theta perturbation about the nominal target theta parameter value can be expected to result in a predictable response, which response can be measured and later evaluated to determine the state of health. The method then proceeds to step 114.

In step 114, the diagnostic method involves measuring an operating characteristic, preferably of a component of or associated with the exhaust treatment system. In the particular SCR catalyst and NH₃ sensor embodiments to be described below, this step of the method involves measuring the NH₃ concentration level sensor output. It should be understood, however, that other sensor outputs may be measured or other operating characteristics can form the basis for determining the state of health. The method then proceeds to step 116.

In step 116, the diagnostic method involves determining the state of health of the component based on an evaluation of both (i) the original diagnostic function which formed the basis for the theta perturbation, and (ii) the measured operation characteristic that results from the theta perturbation (or that is the result of the theta perturbation). The evaluation may involve an assessment of the (i) the signal amplitude or magnitude of the measured, resultant operating characteristic in view of perturbing diagnostic function, as compared to expected levels; (ii) the relative phasing (or delay time) of the measured, resultant operating characteristic compared to expected phasing; as well as (iii) frequency of perturbation switch between the measured, resultant operating characteristic relative to the perturbing diagnostic function. In addition, it should be understood that while the illustrative embodiments use a periodic perturbing function (*e.g*., triangle wave), other functions are possible, for example only, use of a step function.

*Diagnostic for SCR Catalyst State of Health.* Figure 6 is a combination chart showing responses of an ammonia concentration sensor to theta perturbation where the responses indicate, respectively, a healthy and an unhealthy SCR catalyst. The X-axis shows time (seconds), while the Y-axis at left shows ammonia concentration (ppm) and the Y-axis at right shows the theta parameter value. The SCR catalyst can degrade over time and with usage, particularly its ammonia storage capability. To determine whether the SCR catalyst may have become degraded in its ammonia storage capability, the theta perturbation block 100 (best shown in Figure 3) is configured to perturb the target theta parameter (target θ_{NH3}) such than an excess of ammonia would be expected to be present and available to be sensed by the ammonia concentration sensor 60 (located at the mid-brick position). One predicate condition before using the NH₃ sensor to check the SCR catalyst is to first confirm proper operation of the NH₃ sensor itself. This predicate check may be performed using conventional methods, or may be performed using the theta perturbation method described below in connection with Figure 7. Accordingly, upon confirmation that the ammonia sensor is functioning properly, if the magnitude of the measured ammonia concentration exceeds an expected level, then this finding implies that the SCR catalyst has lost some of its ammonia storage capability. Furthermore, a reduction in NOx conversion efficiency would be expected. As described above, appropriate diagnostic action may be taken, such as issuing operator alerts or setting diagnostic trouble codes. In addition, the diminished ammonia storage capability may be communicated to the dosing control 80, which may in turn be configured to use this information in its theta control strategy.

Figure 6 shows the results of a simulation conducted to show how SCR catalyst degradation may be detected. In particular, the simulation makes use of a six inch SCR catalyst, which for purposes of the simulation was considered to provide the nominal amount (*i.e*., 100%) of ammonia storage. To simulate a loss in ammonia storage capability, a three inch SCR catalyst was used for comparison. The three-inch SCR catalyst can be taken as indicative of the degraded performance for a six-inch SCR catalyst. In Figure 6, the target ammonia surface coverage parameter theta (target θ_{NH3}), was perturbed in accordance with a predetermined, known diagnostic function, and is shown by reference numeral 118. The selected diagnostic function may be a periodic signal, which oscillates above and below the nominal value for theta (target θ_{NH3}) for the operating condition shown. In the illustrative embodiment, the diagnostic function is a triangle waveform, although many other types of waveforms may be used. The response of the ammonia concentration sensor, for the well performing catalyst, namely the six-inch SCR catalyst, is shown as trace 120. As shown, the ammonia concentration sensor output signal indicates a low ammonia concentration, having a magnitude designated by reference numeral 122. The response of the ammonia sensor for the three-inch SCR catalyst ("degraded") is shown as trace 124, which has a significantly greater magnitude (designated 126) than that of the normal SCR catalyst (trace 120). The increased magnitude can be attributed to a loss of ammonia storage capability in the "degraded" SCR catalyst, which may in real-world applications impact NOx emissions performance (tail pipe). To quantify this evaluation, a maximum expected magnitude threshold may be established, which may be no less than the magnitude 122, for example. From this, a "good"/"bad" evaluation may be made. Alternatively, a more specific measure of the degradation can be obtained by comparing the measured magnitude with the expected magnitude and arriving at a ratio, percentage or other more descriptive measure of storage capability (or loss thereof, *e.g*., 90% of full capability).

*Diagnostic For Ammonia Concentration Sensor State of Health.* Figure 7 is a combination chart showing respective responses of a healthy and an unhealthy NH₃ concentration sensor. The X-axis shows time (seconds), while the Y-axis at left shows ammonia concentration (ppm) and the Y-axis at right shows the theta parameter value. In this embodiment, the theta perturbation varies the amount of ammonia provided to the SCR catalyst, and the valuation involves determining whether the ammonia sensor can detect the resulting variations in ammonia concentration. The performance of the ammonia sensor to properly detect changes in NH₃ concentration will allow distinguishing a properly functioning ammonia sensor from an improperly functioning one, for either control purposes or for diagnostic purposes. Again, preferably, the diagnostic is performed under substantially steady-state engine operating conditions (*i.e*., constant exhaust flow and temperature) so that any variation in the sensor response can be properly attributed to just the theta perturbation.

Figure 7 shows a trace 128 of the target ammonia surface coverage theta parameter (target θ_{NH3}) as varied by the theta perturbation block 100 about a nominal value in accordance with a diagnostic function (*e.g*., triangle wave in the illustrative embodiment). The diagnostic function is configured and applied so that an excess of NH₃ is expected to be present in the SCR catalyst for detection by the ammonia concentration sensor 60 (located at a mid-brick position). Trace 130 illustrates the response of a properly functioning ammonia concentration sensor while trace 132 shows the response of a malfunctioning (or degraded performance) ammonia concentration sensor. When the ammonia sensor does not measure the predicted concentration level of ammonia in the exhaust gas stream, based on the perturbed target theta parameter (target θ_{NH3}), then the diagnostic determines that an ammonia sensor performance issue exists. Note, the measured operating characteristic here may include a magnitude, or may be a relative phase between the theta perturbation and the response, or may be a tracking characteristic. As shown in Figure 7, a point 134₁ on the perturbed target theta parameter trace 128, which is a local maximum on the trace, results in a corresponding local maximum in the output of a properly functioning NH₃ sensor, for example as shown at point 134₂. Likewise, a point 136₁ on the perturbed target theta parameter trace 128, which is a local minimum on the trace, results in a corresponding local minimum in the output of a properly functioning NH₃ sensor, for example as shown at point 136₂. Note, that this correspondence in the phasing in absent in output of the degraded sensor, as shown in trace 132.

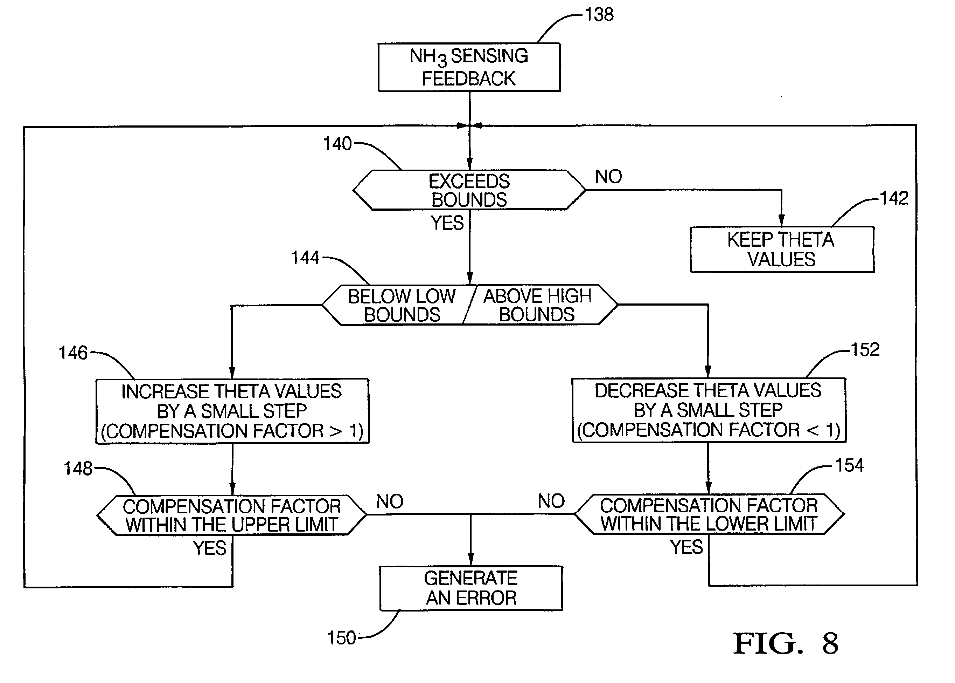

*Diagnostic-Target Theta Adaptation Exceeds Control Authority.* Figure 8 is a flowchart showing a further diagnostic method to detect when adaptation of the target theta map (*i.e*., values) exceeds the control authority limits for such adaptation. While developers of SCR-based exhaust treatment systems face challenges in configuring systems that meet both NOx emission standards as well as NH₃ slip targets, such challenges are heightened when one considers the additional requirement of in-use compliance over the service life of the system. The adaptive learning block 102 (Figure 3) is generally configured to account for and insert compensation into the target theta values for catalyst degradation, urea injection malfunction or dosing fluid concentration variation that may be encountered during real-world use. The adaptive learning block 102 is responsive to the ammonia concentration signal 62 produced by sensor 60, preferably located at a mid-brick position. The adaptive learning block 102 is configured to use the NH₃ sensing feedback to adapt (or adjust) the target theta parameter (Target θ_{NH3}), thereby "pulling in" system variation that may occur in the field. The ability of the adaptation block 102 to adjust for dosing errors and the like enables some level of control authority to bring the system to near nominal levels. At some point, however, the ability to adapt target theta to overcome errors due to reagent mis-dosing into the exhaust gas stream, the quality of the reagent being introduced (*e.g*., the aqueous urea concentration level) and the state of the SCR catalyst, will reach its control limit for maintaining emissions desired performance. Accordingly, when the adaptive learning block 102 excessively learns (*i.e*., adapts the target theta parameter beyond a high or low threshold, the diagnostic assumes that some system-level degradation must have occurred, and the diagnostic may be configured to notify the overall emissions control monitor.

Figure 8 is a flowchart of the logic of the this diagnostic in the context of a simplified adaptation scheme. The diagnostic is configured for detecting and reporting excessive adaptation. The method begins in step 138, where the most recent, measured ammonia (NH₃) concentration level is provided by the mid-brick positioned sensor, and which will be used as feedback in the adaptation. The method then proceeds to step 140.

In step 140, the method is configured to determine whether the ammonia concentration level sensed by the ammonia sensor 60 (mid-brick) exceeds predetermined bounds. Predetermined bounds may be a defined window extending higher ("upper bound") and lower ("lower bound") than the expected ammonia concentration, to account for small variations that are deemed not significant enough to require adaptation of the target theta parameter (Target θ_{NH3}). If the answer in this decision step is "NO" then the method branches to step 142 ("Keep theta values"). Step 142 means that the dosing control 80 will follow the existing target θ_{NH3} values (*e.g*., as shown in curve form in Figure 4), but as modified by any previous adaptations. Otherwise, if the answer is "YES" (*i.e*., the measured NH₃ concentration is out of bounds-outside the window defined above), then the method branches to step 144. Following step 144 means that adaptation may be possible.

In step 144, the method is configured to determine whether the measured NH₃ concentration is lower than the lower bound described above. If the answer is "YES", then the method branches to step 146.

In step 146, the adaptation method is configured to increase the then-existing Target θ_{NH3} values by a predetermined step (*e.g*., a compensation factor >1). The method then proceeds to step 148.

In step 148, the method determines whether the compensation factor (as increased) is still within an upper limit (*i.e*., does not exceed the upper limit). If the answer is "YES", then the adaptation has not exceeded its control authority and the method returns to the beginning. However, if the answer in decision block 148 is "NO" then the method branches to step 150 ("Generate an error"). In this situation, the net, accumulated positive-going adjustment to the target theta due to the adaptation logic has exceeded the control authority limit. As alluded to above, the control authority limits (both upper and lower) may be selected such that if exceeded, the logic can infer than there has been a compromise in one or more of the components of the exhaust treatment system 14. These compromises in performance may be due to problems in the dosing delivery, quality issues with the urea-water solution, or perhaps a decrease in the ammonia storage capability of the SCR catalyst. In step 150, the diagnostic may set a diagnostic trouble code, may activate an alert to an operator, or take such other action may be appropriate.

Otherwise, in step 144, if the measured ammonia concentration exceeds the upper bounds, thereby requiring adaptation, then the method branches to step 152.

In step 152, the method is configured to decrease the then-existing target θ_{NH3} values by a predetermined step (*e.g*., a compensation factor <1). The method then proceeds to step 154.

In step 154, the method determines whether the compensation factor (as decreased) is still within the lower limit (*i.e*., is still higher than the lower limit). If the answer is "YES", then the adaptation has not exceeded its control authority and the method returns to the beginning. However, if the answer in decision block 154 is "NO" then the method branches to step 150 ("Generate an error"; See the description of step 150 above).

## Claims

1. A method of performing a diagnostic on an exhaust treatment system, having a selective catalytic reduction (SCR) catalyst, of an internal combustion engine comprising the steps of:
introducing a reductant into an exhaust gas stream in an amount based on at least a surface coverage parameter theta (θ) selected so as to increase NOx conversion and reduce NH₃ emission from the SCR catalyst;
adapting the theta parameter based on a measured NH₃ level emitted from the SCR catalyst;
generating an exhaust system fault when an adaptation amount for the theta parameter exceeds a predetermined threshold;
wherein said generating step includes the sub-steps of:
establishing respective upper and lower adaptation limits;
generating the fault when the adaptations of the theta parameter exceeds one of the upper and lower adaptation limits;
wherein said reductant comprises one of ammonia and aqueous urea, said step adapting step includes the sub-steps of:
defining a base value for the theta parameter based on an inlet temperature of the SCR catalyst;
determining a compensation factor based on a measured NH₃ concentration level emitted from the SCR catalyst; and
determining the adapted theta parameter value in accordance with the base value and the compensation factor;
**characterized in that** said sub-step of determining a compensation factor includes the sub-step of:
determining when the measured NH₃ concentration level exceeds an upper bound and increasing the compensation factor, or determining when the measured NH₃ concentration level is less than a lower bound and decreasing the compensation factor.

## Patentansprüche

1. Verfahren zum Durchführen einer Diagnose eines Abgasbehandlungssystems, das einen "selektive katalytische Reduktion (SCR - selective catalytic reduction)"-Katalysator hat, eines Verbrennungsmotors, das die Schritte aufweist:
Einführen eines Reduktionsmittels in einen Abgasstrom in einer Größe basierend auf zumindest einem Oberflächenbedeckungsparameter Theta (θ), der ausgewählt ist, um eine NOₓ-Umwandlung zu erhöhen und eine NH₃-Emission aus dem SCR-Katalysator zu reduzieren;
Anpassen des Theta-Parameters basierend auf einem gemessenen NH₃-Pegel, der von dem SCR-Katalysator abgegeben wird;
Erzeugen eines Abgassystemfehlers, wenn eine Anpassungsgröße für den Theta-Parameter eine vorgegebene Schwelle übersteigt;
wobei der Schritt des Erzeugens die Teilschritte umfasst:
Festsetzen jeweiliger oberer und unterer Anpassungsgrenzen; Erzeugen des Fehlers, wenn die Anpassungen des Theta-Parameters eine der oberen und unteren Anpassungsgrenzen übersteigen;
wobei das Reduktionsmittel eines aus Ammoniak und wässrigem Harnstoff aufweist, wobei der Schritt des Anpassens die Teilschritte umfasst:
Definieren eines Basiswerts für den Theta-Parameter basierend auf einer Einlasstemperatur des SCR-Katalysators;
Bestimmen eines Ausgleichsfaktors basierend auf einem gemessenen NH₃-Konzentrationspegel, der von dem SCR-Katalysator abgegeben wird; und
Bestimmen des angepassten Theta-Parameter-Werts in Übereinstimmung mit dem Basiswert und dem Ausgleichsfaktor;
**dadurch gekennzeichnet, dass** der Teilschritt des Bestimmens eines Ausgleichsfaktors den Teilschritt umfasst:
Bestimmen, wenn der gemessene NH₃-Konzentrationspegel eine obere Grenze übersteigt, und Erhöhen des Ausgleichsfaktors, oder Bestimmen, wenn der gemessene NH₃-Konzentrationspegel geringer ist als eine untere Grenze, und Verringern des Ausgleichsfaktors.

## Revendications

1. Procédé pour effectuer un diagnostic sur un système de traitement d'échappement, ayant un catalyseur de réduction catalytique sélectif (SCR), d'un moteur à combustion interne, comprenant les étapes consistant à :
introduire un réducteur dans un courant de gaz d'échappement dans une quantité basée sur au moins un paramètre de couverture de surface thêta (θ) choisi de manière à augmenter la conversion des oxydes d'azote NOx et à réduire les émissions de NH₃ depuis le catalyseur SCR ;
adapter le paramètre θ en se basant sur un niveau mesuré de NH₃ émis depuis le catalyseur SCR ;
générer un défaut du système d'échappement quand une quantité d'adaptation pour le paramètre θ excède un seuil prédéterminé ;
dans lequel ladite étape de génération inclut les sous-étapes consistant à :
établir des limites d'adaptation respectives supérieure et inférieure ;
générer le défaut quand les adaptations du paramètre θ excèdent l'une des limites d'adaptation supérieure et inférieure ;
dans lequel ledit réducteur comprend soit de l'ammoniac soit de l'urée aqueuse, ladite étape d'adaptation incluant les sous-étapes consistant à :
définir une valeur de base pour le paramètre θ en se basant sur une température d'entrée du catalyseur SCR ;
déterminer un facteur de compensation basé sur un niveau de concentration mesurée de NH₃ émis depuis le catalyseur SCR ; et
déterminer la valeur du paramètre θ adaptée en accord avec la valeur de base et avec le facteur de compensation ;
**caractérisé en ce que** ladite sous-étape consistant à déterminer un facteur de compensation inclut la sous-étape consistant à :
déterminer quand le niveau de concentration mesurée de NH₃ excède une limite supérieure et augmenter le facteur de compensation, ou déterminer quand le niveau de concentration mesurée de NH₃ est inférieur à une limite inférieure et diminuer le facteur de compensation.
